# EUROPEAN PATENT SPECIFICATION

(11) **EP 4 050 402 B1**
(45) Date of publication and mention of the grant of the patent: **29.07.2026**
(21) Application number: 21207838.0
(22) Date of filing: 11.11.2021
(51) Int. Cl.: G02B 27/01, G06V 20/20, G06V 20/40

(54) **INFORMATION PROMPT DISPLAY METHOD, APPARATUS, COMPUTER READABLE MEDIUM, PROGRAM PRODUCT AND SMART GLASSES**
VERFAHREN ZUR ANZEIGE VON INFORMATIONEN, VORRICHTUNG, COMPUTERLESBARES MEDIUM, PROGRAMMPRODUKT UND INTELLIGENTE BRILLEN
PROCEDE D'AFFICHAGE D'UNE PROMPTION D'INFORMATION, APPAREIL, SUPPORT LECTABLE PAR UN ORDINATEUR, PRODUIT DE PROGRAMME ET LUNETTES INTELLIGENTES

(30) Priority: 26.02.2021 CN 202110216633
(43) Date of publication of application: 31.08.2022
(73) Proprietor: Beijing SuperHexa Century Technology Co. Ltd., Beijing 100085 (CN)
(72) Inventor: GUAN, Jingyan, Beijing, 100085 (CN)
(74) Representative: Barker Brettell LLP

(56) References cited:
- WO-A1-2011/106798
- CN-A- 109 255 314
- CN-B- 108 905 095
- US-A1- 2014 146 178
- SANTOS-TORRES ANDRÉS ET AL: "An empirical comparison of interaction styles for map interfaces in immersive virtual environments", MULTIMEDIA TOOLS AND APPLICATIONS, vol. 79, no. 47-48, 31 December 2020 (2020-12-31) - 31 December 2020 (2020-12-31), pages 35717 - 35738, XP037312077, ISSN: 1380-7501, DOI: 10.1007/S11042-020-08709-9
- SOLTANI POOYA ET AL: "Augmented reality tools for sports education and training", COMPUTERS & EDUCATION, PERGAMON, AMSTERDAM, NL, vol. 155, 19 May 2020 (2020-05-19), XP086187523, ISSN: 0360-1315, [retrieved on 20200519], DOI: 10.1016/J.COMPEDU.2020.103923

## Description

### TECHNICAL FIELD

The present application relates to the field of smart devices, in particular, to an information prompt method, apparatus, medium, glasses, and program product.

### BACKGROUND

With the development of competitive sports, when various sports competitions (such as the Olympics, Winter Olympics, and Basketball Association) are held, more and more sports fans will choose to go to the stadium to watch the games.

At present, when watching a game in the stadium, the spectator can only acquire the performance of athletes through the naked eyes, while can only acquire the specific performance parameters of the athletes through the live broadcast or large screen on-site.

Upon the traditional way of watching the game in the stadium, the types of information that the spectator can acquire are relatively simple, and the timeliness of acquiring specific data about the game is poor.

CN 109255314A relates to an information prompting method, device, intelligent glasses and storage medium.

The document of SANTOS-TORRES ANORES ("An empirical comparison of interaction styles for map interfaces in immersive virtual environments") relates to an empirical comparison of interaction styles for map interfaces in immersive virtual environments.

CN 108905095B relates to method and device for evaluating an athlete's competition status.

### SUMMARY

The present application is set out in the appended set of claims. The embodiment of the present application provides an information prompt method, apparatus, medium, glasses, and program product to solve the technical problem that upon the traditional way of watching the game in the stadium, the types of information that the spectator can acquire are relatively simple, and the timeliness is poor.

In a first aspect, an embodiment of the present application provides an information prompt method, which is applied to a pair of smart glasses, and the method includes:
acquiring a scene video of an external scene, where the scene video includes a behavior feature of a target object;
matching prompt information corresponding to the target object according to the behavior feature, where the prompt information is associated with the behavior feature; and
displaying the prompt information on lenses of the pair of smart glasses.

In a possible design, the matching prompt information corresponding to the target object according to the behavior feature includes:
acquiring face information of candidate objects in the scene video, and determining the target object from the candidate objects according to preset face information; and
determining, according to an action feature of the target object in the scene video, technical parameters of sports, where the behavior feature includes the action feature, and the prompt information includes the technical parameters of sports.

In a possible design, the determining, according to an action feature of the target object in the scene video, technical parameters of sports includes:
determining, according to the action feature of the target object, a behavior type of the target object; and
determining, according to both state change information of a target device in the scene video and the behavior type, the technical parameters of sports.

In a possible design, after the determining the target object from the candidate objects according to preset face information, the method further includes:
sending object information of the target object to other devices, where the other devices include a server and/or another pair of smart glasses;
receiving another scene video and another piece of prompt information sent by the other devices, where the another scene video differs from the scene video in at least a shooting angle of the external scene, and the another piece of prompt information is information associated with the behavior feature of the target object in the another scene video; and
displaying the another scene video and/or the another piece of prompt information on lenses of the pair of smart glasses.

In a possible design, the information prompt method further includes:
selecting, in response to a selection instruction, the target object from the candidate objects.

In a possible design, the matching prompt information corresponding to the target object according to the behavior feature includes:
determining, according to a sound feature in audio information, the prompt information of target audio, where the target object includes the target audio, the scene video includes the audio information, and the behavior feature includes the sound feature.

In a second aspect, an embodiment of the present application provides an information prompt apparatus, including:
a video acquisition module, configured to acquire a scene video of an external scene, where the scene video includes a behavior feature of a target object;
an information processing module, configured to match prompt information corresponding to the target object according to the behavior feature, where the prompt information is associated with the behavior feature; and
an information display module, configured to display the prompt information.

In a possible design, the information prompt apparatus further includes:
a face acquisition module, configured to acquire face information of candidate objects in the scene video, and determine the target object from the candidate objects according to preset face information;
the information processing module is further configured to determine, according to an action feature of the target object in the scene video, technical parameters of sports, where the behavior feature includes the action feature, and the prompt information includes the technical parameters of sports.

In a possible design, the information processing module is specifically configured to:
determine, according to the action feature of the target object, a behavior type of the target object; and
determine, according to both state change information of a target device in the scene video and the behavior type, the technical parameters of sports.

In a possible design, the information prompt apparatus further includes:
an information sending module, configured to send object information of the target object to other devices, where the other devices include a server and/or another pair of smart glasses; and
an information receiving module, configured to receive another scene video and another piece of prompt information sent by the other devices, where the another scene video differs from the scene video in at least a shooting angle of the external scene, and the another piece of prompt information is information associated with the behavior feature of the target object in the another scene video;
the information display module is further configured to display both the another scene video and the another piece of prompt information.

In a possible design, the information prompt apparatus further includes:
an object selection module, configured to select, in response to a selection instruction, the target object from the candidate objects.

In a possible design, the information processing module is specifically configured to:
determine, according to a sound feature in audio information, the prompt information of target audio, where the target object includes the target audio, the scene video includes the audio information, and the behavior feature includes the sound feature.

In a third aspect, an embodiment of the present application further provides a pair of smart glasses, including: a processor, a memory, lenses, and an image sensor, where the processor is connected to the memory, the lenses, and the image sensor, respectively;
the image sensor is configured to acquire a scene video of an external scene;
the memory is configured to store a computer program of the processor;
where the processor is configured to implement any one of the information prompt methods in the first aspect by executing the computer program;
the lenses are configured to process generated prompt information through the information prompt method.

In a fourth aspect, an embodiment of the present application also provides a storage medium on which a computer program is stored, where, when the computer program is executed by a processor, any one of the information prompt methods in the first aspect is implemented.

In a fifth aspect, an embodiment of the present application also provides a computer program product, including a computer program, where, when the computer program is executed by a processor, any one of the information prompt methods in the first aspect is implemented.

The embodiments of the present application provide an information prompt method, apparatus, medium, glasses, and program product, which acquire the scene video of the external scene in real time by wearing a pair of smart glasses, and then automatically match, combined with the behavior feature of the target objects, the corresponding related information, and provide real-time feedback to the spectator by direct displaying on the pair of smart glasses, thereby enriching the types of information that the spectator can acquire on-site, and at the same time greatly improving the timeliness of acquiring the related information by the spectator.

### BRIEF DESCRIPTION OF THE DRAWINGS

In order to more clearly illustrate embodiments of the present application or the technical solution in the prior art, accompanying drawings required for describing the embodiments or the prior art will be briefly described below. Obviously, the accompanying drawings in the following description are some of the embodiments of the present application, and other drawings can be acquired by those skilled in the art based on these accompanying drawings without any creative effort.
FIG. 1 is an application scenario diagram of an information prompt method according to an exemplary embodiment;
FIG. 2 is an application scenario diagram of an information prompt method according to another exemplary embodiment;
FIG. 3 is a schematic diagram showing the structure of a pair of smart glasses according to an exemplary embodiment;
FIG. 4 is a schematic flowchart of an information prompt method according to an exemplary embodiment;
FIG. 5 is a schematic flowchart of an information prompt method according to another exemplary embodiment;
FIG. 6 is a schematic diagram showing the display of information prompt according to an exemplary embodiment;
FIG. 7 is a schematic diagram showing the display of information prompt according to another exemplary embodiment;
FIG. 8 is a schematic flowchart of an information prompt method according to a further exemplary embodiment;
FIG. 9 is a schematic diagram of communication between different pairs of smart glasses;
FIG. 10 is a schematic diagram of communication between a pair of smart glasses and a server;
FIG. 11 is a schematic diagram showing the structure of an information prompt apparatus according to an exemplary embodiment;
FIG. 12 is a schematic diagram showing the structure of an information prompt apparatus according to another exemplary embodiment; and
FIG. 13 is a block diagram showing a pair of smart glasses according to an exemplary embodiment.

### DESCRIPTION OF EMBODIMENTS

In order to make the purpose, technical solution, and advantages of the embodiments of the present application clearer, the technical solution in the embodiments of the present application will be described clearly and completely together with the accompanying drawings in the embodiments of the present application. Obviously, the described embodiments are part of the embodiments of the present application, and not all of them. Based on the embodiments of the present application, all other embodiments acquired by those of ordinary skill in the art without creative labor shall fall within the scope of protection of the present application.

The terms "first", "second", "third", "fourth", etc. (if any) in the specification, in claims of the present application and in the above accompanying drawings are used to distinguish similar objects, and are not necessarily used to describe a particular order or sequence. It should be understood that the data thus used may be interchanged in some cases, so that the embodiments of the present application described herein can be implemented in an order other than those illustrated or described herein. Furthermore, the terms "include" and "have" and any variations thereof are intended to cover non-exclusive inclusion, for example, a process, method, system, product or device that include a series of steps or units are not necessarily limited to those explicitly listed, but may include other steps or units that are not explicitly listed or inherent to the process, method, product or device.

At present, when watching a game in the stadium, the spectator can only acquire the performance of athletes through the naked eyes, while can only acquire the specific performance parameters of the athletes through the live broadcast or large screen on-site. For example, when watching a football game in the stadium, the spectator can only acquire the scores of both sides and the duration of the current game through the large screen on-site, and cannot acquire the specific performance data of each player in time, which can only be acquired after the game. In addition, when watching a track and field event (for example: sprinting) in the stadium, the spectator can only know the sequence of current athletes on the runway, but cannot acquire the current running parameters of the athletes. Similarly, they can only get the sports performance parameters of each athlete through the large screen after the game.

The purpose of the present application is to provide an information prompt method, so that the user can acquire a scene video of the external scene in real time by wearing a pair of smart glasses when watching a game in the stadium; and then corresponding related information can be automatically matched based on behavior features of various target objects; the corresponding related information is directly displayed on the pair of smart glasses to feed back to the user in real time, further enriching the types of information that the spectator can acquire on-site, and at the same time greatly improving the timeliness of acquiring the related information by the spectator. In addition, by directly displaying the prompt information on lenses of the pair of smart glasses, the connection between the target object and the prompt information can be effectively established in the spectator's field of vision, thereby enhancing the pertinence of the prompt information display.

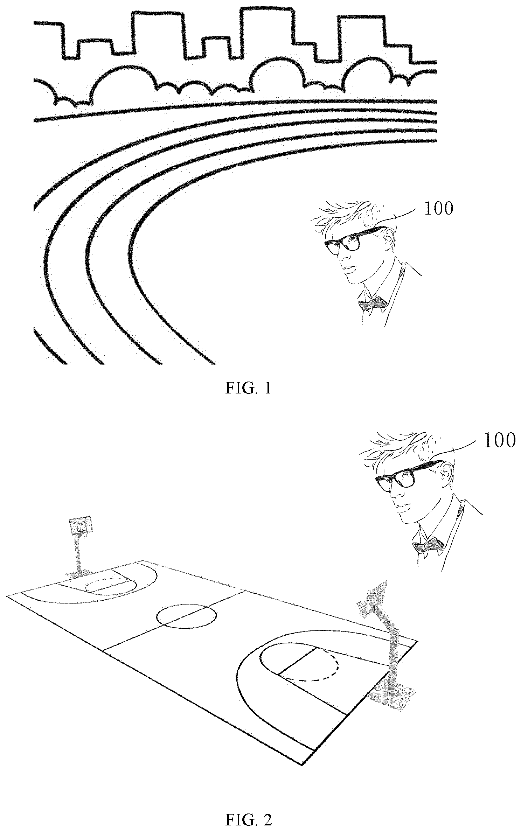

FIG. 1 is an application scenario diagram of an information prompt method according to an exemplary embodiment. As shown in FIG. 1, the information prompt method provided in this embodiment can be used when the spectator is watching a track and field event (for example, sprinting) in the stadium. The spectator can acquire real-time scene video in the track and field stadium by wearing the pair of smart glasses 100. Afterwards, technical parameters of sports of each athlete (for example, current running speed) can be calculated through the image technology. The technical parameters of sports are then displayed on the lenses of the pair of smart glasses as prompt information, so that the spectator can acquire the technical parameters of sports of the athletes in real time while watching the game, which greatly improves the watching experience. **In** addition, relevant commentary subtitles and technical statistics of track and field events can also be displayed on the lenses of the pair of smart glasses.

FIG. 2 is an application scenario diagram of an information prompt method according to another exemplary embodiment. As shown in FIG. 2, the information prompt method provided in this embodiment can also be used when the spectator is watching a ball game (for example, a basketball game) in the stadium. The spectator can acquire real-time scene video of the stadium by wearing the pair of smart glasses 100. Afterwards, technical parameters of sports of each athlete (for example, scores) can be calculated through the image technology. The technical parameters of sports are then displayed on the lenses of the pair of smart glasses as prompt information, so that the spectator can acquire the technical parameters of sports of the athletes in real time while watching the game, which also greatly improves the watching experience. In addition, relevant commentary subtitles and technical statistics of the ball game can also be displayed on the lenses of the pair of smart glasses.

In addition, the information prompt method provided in this embodiment can also be used when watching a concert. When watching a concert, the spectator can acquire the live audio in real time, and then the information corresponding to the audio is matched through the audio technology, for example, the song's title, lyrics, composition, etc. The acquired audio-related information is displayed on the lenses of the pair of smart glasses as prompt information, so that the spectator can acquire the current song information in real time while watching the concert, thereby greatly improving the watching experience of the concert.

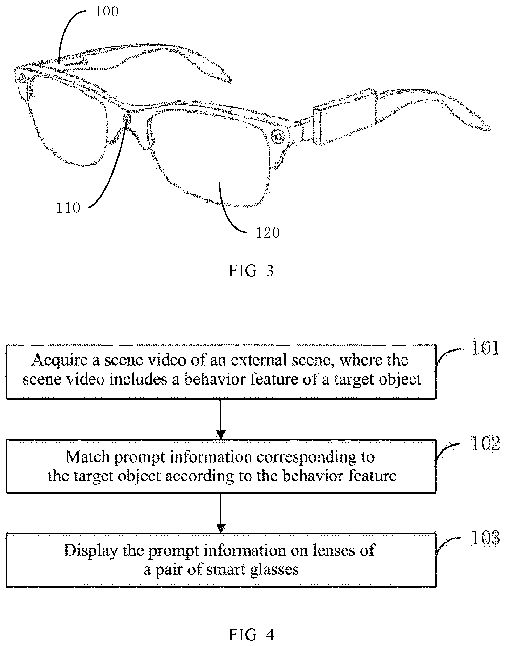

FIG. 3 is a schematic diagram showing the structure of a pair of smart glasses according to an exemplary embodiment. As shown in FIG. 3, for each of the foregoing cases, the pair of smart glasses 100 worn by the spectator has disposed thereon at least one image sensor 110, through which the scene video of the external scene can be acquired. In addition, the pair of smart glasses 100 are also provided with lenses 120 used for displaying information, so that related prompt information that are required by the spectator can be displayed on the lenses 120.

FIG. 4 is a schematic flowchart of an information prompt method according to an exemplary embodiment. As shown in FIG. 4, the information prompt method provided in this embodiment includes:
Step 101, Acquire a scene video of an external scene, where the scene video includes a behavior feature of a target object.

In this step, when watching a game or a performance, the spectator can wear a pair of smart glasses. Thereby, the scene video of the current external scene is acquired through an image sensor on the pair of smart glasses, and the scene video includes the behavior feature of the target object. Worthy of explanation, the target object in this step can be a person object, a device object, and other related objects that are required to be monitored, and the behavioral feature can be the action feature, voice feature, and other related features that are required to be monitored.

Step 102, Match prompt information corresponding to the target object according to the behavior feature.

After the pair of smart glasses acquire the scene video, the behavior feature in the scene video can be extracted by calculation upon a processing function of the pair of smart glasses itself or by calculation upon uploading to the relevant server, and the prompt information, which is associated with the behavior feature, corresponding to the target object can be matched according to the extracted behavior feature.

For example, speed information can be matched with a running action of the runner as the current prompt information, the current score, assist, foul and other pieces of information can be matched with players' shooting, dribbling or passing actions as the current prompt information, or the song's title, lyrics, composition and other pieces of information can be matched with the currently playing song as the current prompt information.

Step 103, Display the prompt information on lenses of the pair of smart glasses.

After matching the prompt information according to the behavior feature of the target object in the scene video, the generated prompt information can be displayed on the lenses of the pair of smart glasses.

In this embodiment, the scene video of the external scene is acquired in real time by wearing a pair of smart glasses, and then corresponding related information is automatically matched in combination with the behavior feature of the target objects, and real-time feedback is provided to the spectator by direct displaying on the pair of smart glasses, thereby enriching the types of information that the spectator can acquire on-site, and at the same time greatly improving the timeliness of acquiring the related information by the spectator.

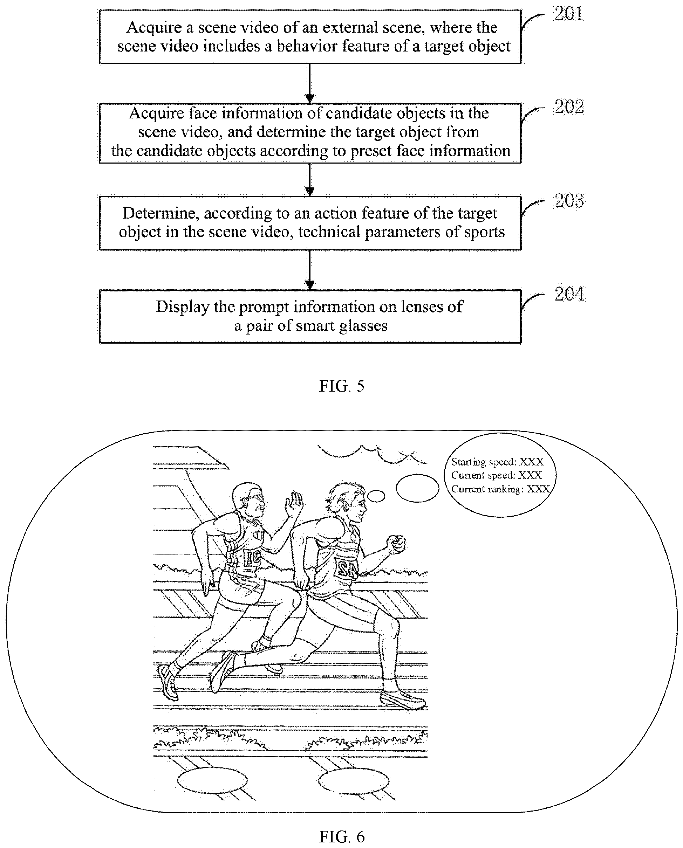

FIG. 5 is a schematic flowchart of an information prompt method according to another exemplary embodiment. As shown in FIG. 5, the information prompt method provided by this embodiment includes:
Step 201, Acquire a scene video of an external scene, where the scene video includes a behavior feature of a target object.

In this step, when watching a game or a performance, the spectator can wear a pair of smart glasses. Thereby, the scene video of the current external scene is acquired through an image sensor on the pair of smart glasses, and the scene video includes the behavior feature of the target object. Worthy of explanation, the target object in this step can be a person object, a device object, and other related objects that are required to be monitored, and the behavioral feature can be the action feature, voice feature, and other related features that are required to be monitored.

Step 202, Acquire face information of candidate objects in the scene video, and determine the target object from the candidate objects according to preset face information.

After acquiring the scene video through the pair of smart glasses, since there may be multiple elements in the scene video, for example, there are multiple athletes in a game, and the spectator does not pay more attention to all athletes. If the information prompt for all athletes are required to be realized in the process of watching the game, the displayed information will be too complicated, which actually causes information interference to the spectator.

Therefore, after acquiring the scene video, face recognition may be first performed on each candidate object therein, and then the target object can be determined based on the screening condition, which can be preset by the user or can be input by the user in the process of watching the game, for example, it can be input by voice or through a third-party device.

All the screening conditions that are preset or set by input can be used as preset face information required in the following process of object determination. In the specific determination process, the face information of each candidate object in the scene video can be first acquired, for example, face information of four athletes A, B, C, and D in the scene video can be acquired. At this point, since the preset person information is the face information of the athlete B, the athlete B can be selected from the four athletes as the target object, so as to perform the following monitoring and corresponding information prompt for the determined target object.

Step 203, Determine, according to an action feature of the target object in the scene video, technical parameters of sports.

In this step, the technical parameters of sports can be determined according to the action feature of the target object in the scene video, the behavioral feature includes the action feature, and the prompt information to be displayed later includes the technical parameters of sports.

Specifically, in a sprint event, the starting speed can be determined according to the starting action of the target athlete in the scene video, and the current speed can be determined according to the athlete's running action. For example, the image position of the target athlete on the runway at each moment can be acquired, the distance moved by the target athlete in each time interval can be then calculated based on the image ranging technology, and the running speed of the athlete at each moment can be calculated finally.

In another possible case, which can be a basketball game, the current technical parameters of sports (for example, scores, assists, rebounds, fouls, etc.) of the target player can be calculated according to various action features of the target player in the scene video. For such competitions with many types of actions, the behavior type of the target object can be determined first according to the behavior feature of the target object, and then the technical parameters of sports can be determined according to both state change information of the target device in the scene video and the behavior type. For example, after acquiring the shooting action of the target player, it can be determined that the current behavior type of the target player is shooting; the flight track of basketball within a preset time period is monitored then, and it can be determined whether the score is finally obtained based on the change in the positional relationship between the basketball and the basket; finally, scores from the beginning to the current moment is counted by continuously monitoring the motion of the target player, so that it can be displayed as prompt information later.

Step 204, Display the prompt information on lenses of the pair of smart glasses.

After matching the prompt information according to the behavior feature of the target object in the scene video, the generated prompt information can be displayed on the lenses of the pair of smart glasses.

FIG. 6 is a schematic diagram showing the display of information prompt according to an exemplary embodiment. As shown in FIG. 6, it is the field of vision that a spectator can have when watching a sprint event through a pair of smart glasses. Related prompt information of sprinters concerned by the spectator can be displayed on the lenses, that is, it is displayed in the field of vision of the current spectator. In addition, in order to make the displayed prompt information have more explicit directivity, the relationship between the prompt information and the target athlete can also be established by displaying prompt elements of related images. For example, by extending a bubble prompt box from the head position of the target athlete, it can be prompted that the prompt information displayed in the prompt box is the information related to the target athlete.

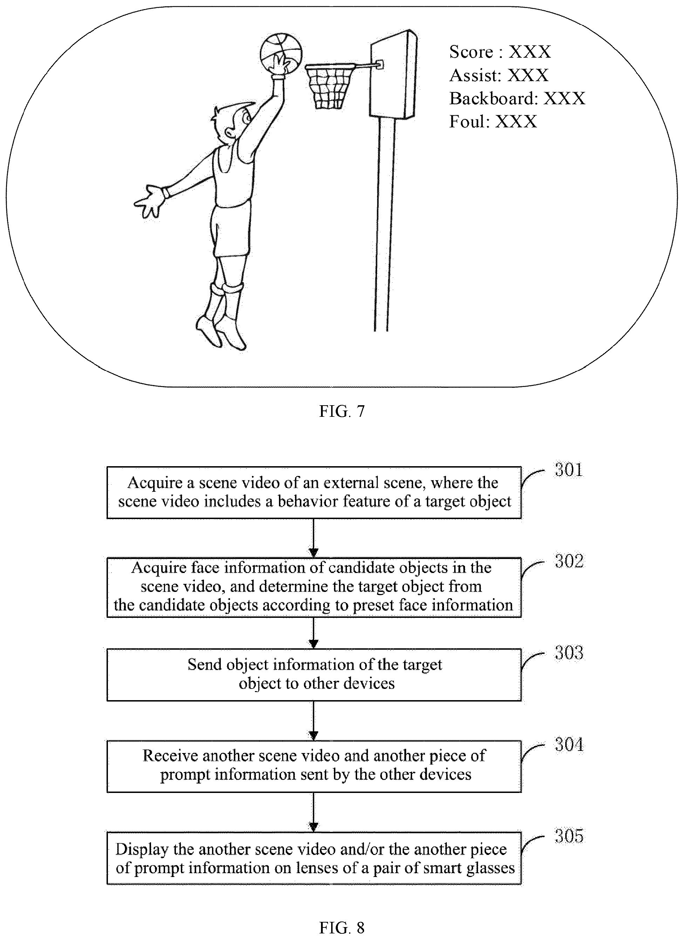

FIG. 7 is a schematic diagram showing the display of information prompt according to another exemplary embodiment. As shown in FIG. 7, it is the field of vision that a spectator can have when watching a basketball game through a pair of smart glasses. Related prompt information of players concerned by the spectator can be displayed on the lenses, that is, it is displayed in the field of vision of the current spectator. In addition, in order to make the displayed prompt information have more explicit directivity, the relationship between the prompt information and the target athlete can also be established by displaying prompt elements of related images. For example, by extending a bubble prompt box from the head position of the target player, it can be prompted that the prompt information displayed in the prompt box is the information related to the target athlete.

In the process of watching the game, the spectator may pay attention to multiple target objects. Therefore, in the process of watching the game, the spectator can select the target object from all the candidate objects in the scene video by inputting a selection instruction, or can switch the target object. The selection instruction can be manually input by the spectator, or it is selected or switched by capturing the eyeball position of the spectator, so as to meet the requirement of the spectator to select or switch the target object in the process of watching the game.

FIG. 8 is a schematic flowchart of an information prompt method according to a further exemplary embodiment. As shown in FIG. 8, the information prompt method provided by this embodiment includes:
Step 301, Acquire a scene video of an external scene, where the scene video includes a behavior feature of a target object.

In this step, when watching a game or a performance, the spectator can wear a pair of smart glasses. Thereby, the scene video of the current external scene is acquired through an image sensor on the pair of smart glasses, and the scene video includes the behavior feature of the target object. Worthy of explanation, the target object in this step can be a person object, a device object, and other related objects that are required to be monitored, and the behavioral feature can be the action feature, voice feature, and other related features that are required to be monitored.

Step 302, Acquire face information of candidate objects in the scene video, and determine the target object from the candidate objects according to preset face information.

After acquiring the scene video through the pair of smart glasses, since there may be multiple elements in the scene video, for example, there are multiple athletes in a game, and the spectator does not pay more attention to all athletes. If the information prompt for all athletes are required to be realized in the process of watching the game, the displayed information will be too complicated, which actually causes information interference to the spectator.

Therefore, after acquiring the scene video, face recognition may be first performed on each candidate object therein, and then the target object can be determined based on the screening condition, which can be preset by the user or can be input by the user in the process of watching the game, for example, it can be input by voice or through a third-party device.

All the screening conditions that are preset or set by input can be used as preset face information required in the following process of object determination. In the specific determination process, the face information of each candidate object in the scene video can be first acquired, for example, face information of four athletes A, B, C, and D in the scene video can be acquired. At this point, since the preset person information is the face information of the athlete B, the athlete B can be selected from the four athletes as the target object, so as to perform the following monitoring and corresponding information prompt for the determined target object.

Step 303, Send object information of the target object to other devices.

Step 304, Receive another scene video and another piece of prompt information sent by the other devices.

After determining the target object, in order to acquire more information about the target object, the object information of the target object can be sent to other devices first, for example, the other devices can be a related server or another pair of smart glasses.

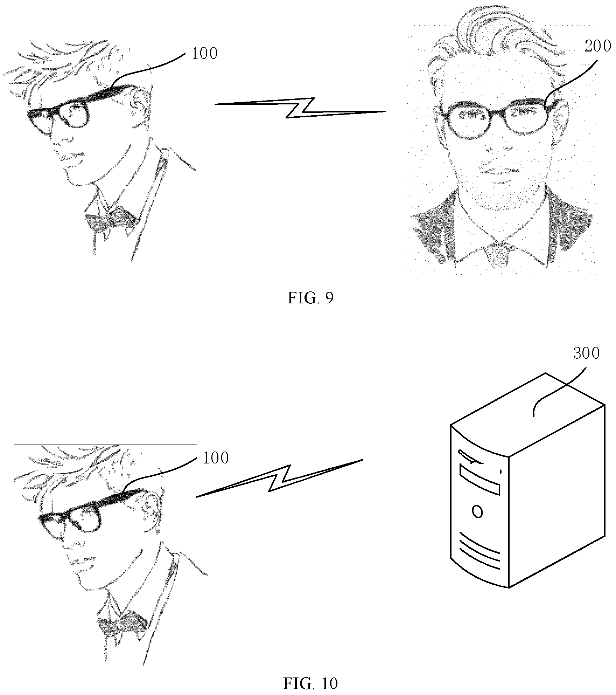

FIG. 9 is a schematic diagram of communication between different pairs of smart glasses. As shown in FIG. 9, when multiple spectators watch the same competition, after the first spectator determines the target object through the first pair of smart glasses 100 he worn, in order to acquire more information of the target object, the first spectator may send the object information of the target object to the second pair of smart glasses 200 worn by the second spectator first; are then receive another scene video and another piece of prompt message sent by the second pair of smart glasses 200, where the another scene video acquired by the second pair of smart glasses 200 differs from the scene video acquired by the first pair of smart glasses 100 in at least a shooting angle of the external scene, and the another piece of prompt information is information associated with the behavior feature of the target object in the another scene video. Therefore, information sharing is achieved through the communication and interaction between different pairs of smart glasses respectively worn by different spectators, so as to further enrich the prompt information of the target object, which greatly improves the watching experience of the spectator.

FIG. 10 is a schematic diagram of communication between a pair of smart glasses and a server. As shown in FIG. 10, after the first spectator determines the target object through the first pair of smart glasses 100 he worn, in order to acquire more information of the target object, the first spectator may send the object information of the target object to the related server 200 of the competition first; and then receive another scene video and another piece of prompt message sent by the second pair of smart glasses 200, where the scene video acquired by the server 200 differs from the scene video acquired by the pair of smart glasses 100 in at least a shooting angle of the external scene, and the another piece of prompt information is information associated with the behavior feature of the target object in the another scene video. In addition, the first pair of smart glasses 100 can also acquire official information about the competition through the server 200, so as to extract corresponding prompt information for display according to display requirements.

Step 305, Display the another scene video and/or the another piece of prompt information on the lenses of the pair of smart glasses.

After acquiring the another scene video and the another piece of prompt information sent by the other devices, the another scene video and/or the another piece of prompt information can be displayed on the lenses of the pair of smart glasses.

In this embodiment, information sharing is achieved by the spectator through the communication between the pair of smart glasses worn by the spectator and other devices, so as to further enrich the prompt information of the target object, which greatly improves the watching experience of the spectator.

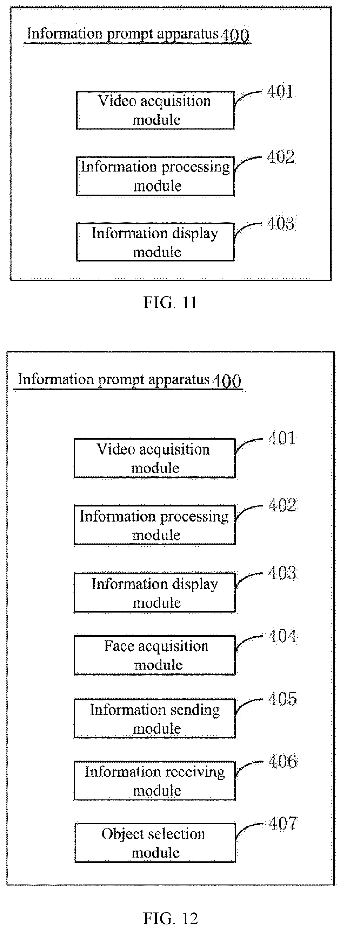

FIG. 11 is a schematic diagram showing the structure of an information prompt apparatus according to an exemplary embodiment. As shown in FIG. 11, the information prompt apparatus 400 provided in this embodiment includes:
a video acquisition module 401, configured to acquire a scene video of an external scene, where the scene video includes a behavior feature of a target object;
an information processing module 402, configured to match prompt information corresponding to the target object according to the behavior feature, where the prompt information is associated with the behavior feature; and
an information display module 403, configured to display the prompt information.

Based on the embodiment shown in FIG. 11, FIG. 12 is a schematic diagram showing the structure of an information prompt apparatus according to another exemplary embodiment. As shown in FIG. 12, the information prompt apparatus 400 provided in this embodiment further includes:
a face acquisition module 404, configured to acquire face information of candidate objects in the scene video, and determine the target object from the candidate objects according to preset face information;
the information processing module 402 is further configured to determine, according to an action feature of the target object in the scene video, technical parameters of sports, where the behavior feature includes the action feature, and the prompt information includes the technical parameters of sports.

In a possible design, the information processing module 402 is specifically configured to:
determine, according to the action feature of the target object, a behavior type of the target object; and
determine, according to both state change information of a target device in the scene video and the behavior type, the technical parameters of sports.

In a possible design, the information prompt apparatus 400 further includes:
an information sending module 405, configured to send object information of the target object to other devices, where the other devices include a server and/or another pair of smart glasses; and
an information receiving module 406, configured to receive another scene video and another piece of prompt information sent by the other devices, where the another scene video differs from the scene video in at least a shooting angle of the external scene, and the another piece of prompt information is information associated with the behavior feature of the target object in the another scene video;
the information display module 403 is further configured to display both the another scene video and the another piece of prompt information.

In a possible design, the information prompt apparatus 400 further includes:
an object selection module 407, configured to select, in response to a selection instruction, the target object from the candidate objects.

In a possible design, the information processing module 402 is specifically configured to:
determine, according to a sound feature in audio information, the prompt information of target audio, where the target object includes the target audio, the scene video includes the audio information, and the behavior feature includes the sound feature.

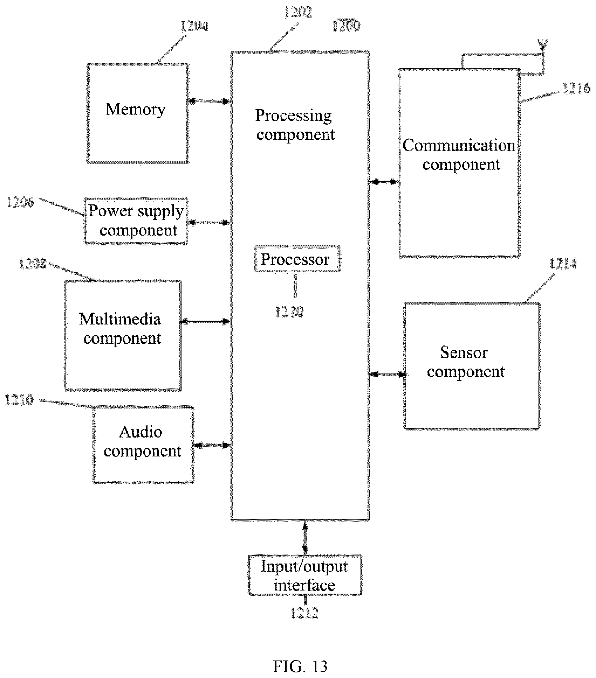

FIG. 13 is a block diagram showing a pair of smart glasses according to an exemplary embodiment. Referring to FIG. 13, the pair of smart glasses 1200 may include one or more of the following components: a processing component 1202, a memory 1204, a power supply component 1206, a multimedia component 1208, an audio component 1210, an input/output (I/O) interface 1212, a sensor component 1214, and a communication component 1216.

The processing component 1202 generally controls the overall operation of the pair of smart glasses 1200, such as the operation associated with display, data communication, multimedia operation and recording operation. The processing component 1202 may include one or more processors 1220 to execute the instruction, so as to implement all or part of the steps of the foregoing method. In addition, the processing component 1202 may include one or more modules to facilitate interaction between the processing component 1202 and other components. For example, the processing component 1202 may include a multimedia module to facilitate the interaction between the multimedia component 1208 and the processing component 1202.

The memory 1204 is configured to store various types of data to support the operation of the pair of smart glasses 1200. Examples of such data include instructions for any application or method operated on the pair of smart glasses 1200, various kinds of data, messages, pictures, videos, etc. The memory 1204 may be implemented by any type of volatile or nonvolatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power supply component 1206 provides power for various components of the pair of smart glasses 1200. The power supply component 1206 may include a power management system, one or more power supplies, and other components, which are configured to generate, manage, and distribute power for the pair of smart glasses 1200.

The multimedia component 1208 includes lenses with a display function provided on the pair of smart glasses 1200.

The audio component 1210 is configured to output and/or input audio signals. For example, the audio component 1210 includes a microphone (MIC) configured to receive external audio signals when the pair of smart glasses 1200 are in an operation mode, such as the call mode, recording mode and voice recognition mode. The received audio signal may be further stored in the memory 1204 or transmitted via the communication component 1216. In some embodiments, the audio component 1210 further includes a speaker for outputting audio signals.

The I/O interface 1212 provides an interface between the processing component 1202 and the peripheral interface module, which may be the keyboard, click wheel, button, etc.

The sensor component 1214 includes one or more sensors configured to provide the pair of smart glasses 1200 with various aspects of state evaluation. For example, the sensor component 1214 may include an image sensor, and the image sensor is configured to acquire the environmental image or the video of the external environment of the pair of smart glasses 1200. In addition, the sensor component 1214 can also detect the ON/OFF state of the pair of smart glasses 1200 and the relative positioning of the component, for example, the components are lenses of the pair of smart glasses 1200. The sensor 1214 can also detect the position change of the pair of smart glasses 1200 or a component of the pair of smart glasses 1200, whether the user is in contact with the pair of smart glasses 1200, the orientation or acceleration/deceleration of the pair of smart glasses 1200, and the temperature change of the pair of smart glasses 1200. The sensor component 1214 may include a proximity sensor configured to detect whether there is an object nearby when no physical contact is available. The sensor component 1214 may also include a light sensor, such as a complementary metal-oxide-semiconductor transistor (CMOS) or charge coupled device (CCD) image sensor, used in imaging applications. In some embodiments, the sensor component 1214 may also include an acceleration sensor, a gyroscope sensor, a magnetic sensor, a pressure sensor, or a temperature sensor.

The communication component 1216 is configured to facilitate wired or wireless communication between the pair of smart glasses 1200 and other devices. The pair of smart glasses 1200 can access a wireless network based on a communication standard, such as wireless fidelity (Wi-Fi), 2nd generation telecommunication (2G), or 3rd generation telecommunication (3G), or a combination thereof. In an exemplary embodiment, the communication component 1216 receives broadcast signals or broadcast-related information from an external broadcast management system via a broadcast channel. In an exemplary embodiment, the communication component 1216 also includes a near field communication (NFC) module to facilitate short-range communication. For example, in the NFC module, implementation may be based on the radio frequency identification (RFID) technology, infrared data association (IrDA) technology, ultra-wideband (UWB) technology, Bluetooth (BT) technology and other technologies.

In an exemplary embodiment, the pair of smart glasses 1200 can be implemented by one or more application-specific integrated circuits (ASIC), digital signal processors (DSP), digital signal processing devices (DSPD), programmable logic devices (PLD), field programmable gate arrays (FPGA), controllers, microcontrollers, microprocessors, or other electronic components, so as to perform the information prompt method, including:
acquiring a scene video of an external scene, where the scene video includes a behavior feature of a target object;
matching prompt information corresponding to the target object according to the behavior feature, where the prompt information is associated with the behavior feature; and
displaying the prompt information on lenses of the pair of smart glasses.

In an exemplary embodiment, there is also provided a non-transitory computer-readable storage medium including the instruction, such as the memory 1204 including the instruction, and the instruction can be executed by the processor 1220 of the pair of smart glasses 1200 to implement the foregoing method. For example, the non-transitory computer-readable storage medium may be the ROM, random access memory (RAM), compact disc read-only memory (CD-ROM), magnetic tape, floppy disk, optical data storage device, etc.

This embodiment also provides a program product, which includes a computer program stored in a readable storage medium. At least one processor of an electronic device can read the computer program from a readable storage medium, and execute the computer program to enable the electronic device to perform steps of the foregoing methods.

Those skilled in the art can understand that all or part of the steps of the foregoing method embodiments can be implemented by hardware related to program instructions. The program can be stored in a computer readable storage medium. When the program is executed, the steps of the foregoing method embodiments are performed. The aforementioned storage media include various media that can store program codes: ROM, RAM, magnetic disks, or optical disks.

## Claims

1. An information prompt method, wherein the method is applied to a pair of smart glasses, and the method comprises:
acquiring (101, 201, 301) a scene video of an external scene;
acquiring face information of candidate objects in the scene video, and selecting, in response to a selection instruction, a target object from the candidate objects, wherein the selection instruction is generated by capturing an eyeball position of a spectator, and the scene video comprises a behavior feature of the target object;
matching (102) prompt information corresponding to the target object according to the behavior feature, wherein the prompt information is associated with the behavior feature; and
displaying (103, 204) the prompt information on lenses of the pair of smart glasses;
wherein the matching (102) prompt information corresponding to the target object according to the behavior feature comprises:
extracting the behavior feature in the scene video by calculation upon uploading to a server, wherein the behavior feature comprises an action feature of the target object;
calculating, according to the action feature of the target object in the scene video, technical parameters of sports, wherein the prompt information comprises the technical parameters of sports;
wherein the calculating, according to the action feature of the target object in the scene video, the technical parameters of sports comprises:
determining, according to the action feature of the target object, a behavior type of the target object; and
determining, according to both state change information of a target device in the scene video and the behavior type, the technical parameters of sports.

2. The information prompt method according to claim 1, wherein after the selecting, in response to the selection instruction, the target object from the candidate objects, the method further comprises:
sending (303) object information of the target object to other devices, wherein the other devices comprise a server and/or another pair of smart glasses;
receiving (304) another scene video and another piece of prompt information sent by the other devices, wherein the another scene video differs from the scene video in at least a shooting angle of the external scene, and the another piece of prompt information is information associated with the behavior feature of the target object in the another scene video; and
displaying (305) the another scene video and/or the another piece of prompt information on lenses of the pair of smart glasses.

3. The information prompt method according to claim 1, further comprising:
determining, according to a sound feature in audio information, the prompt information of target audio, wherein the target object comprises the target audio, the scene video comprises the audio information, and the behavior feature comprises the sound feature.

4. An information prompt apparatus (400), comprising:
a video acquisition module (401), configured to acquire a scene video of an external scene;
a face acquisition module (404), configured to acquire face information of candidate objects in the scene video;
an object selection module (407), configured to select, in response to a selection instruction, a target object from the candidate objects, wherein the selection instruction is generated by capturing an eyeball position of a spectator, and the scene video comprises a behavior feature of the target object;
an information processing module (402), configured to match prompt information corresponding to the target object according to the behavior feature, wherein the prompt information is associated with the behavior feature; and
an information display module (403), configured to display the prompt information;
wherein the information processing module (402) is further configured to:
extract the behavior feature in the scene video by calculation upon uploading to a server, wherein the behavior feature comprises an action feature of the target object;
calculate, according to the action feature of the target object in the scene video, technical parameters of sports, wherein the prompt information comprises the technical parameters of sports;
wherein the information processing module (402) is specifically configured to:
determine, according to the action feature of the target object, a behavior type of the target object; and
determine, according to both state change information of a target device in the scene video and the behavior type, the technical parameters of sports.

5. The information prompt apparatus (400) according to claim 4, further comprising:
an information sending module (405), configured to send object information of the target object to other devices, wherein the other devices comprise a server and/or another pair of smart glasses; and
an information receiving module (406), configured to receive another scene video and another piece of prompt information sent by the other devices, wherein the another scene video differs from the scene video in at least a shooting angle of the external scene, and the another piece of prompt information is information associated with the behavior feature of the target object in the another scene video;
the information display module (403) is further configured to display the another scene video and/or the another piece of prompt information.

6. The information prompt apparatus (400) according to claim 4, wherein the information processing module (402) is further configured to:
determine, according to a sound feature in audio information, the prompt information of target audio, wherein the target object comprises the target audio, the scene video comprises the audio information, and the behavior feature comprises the sound feature.

7. A pair of smart glasses, comprising: a processor, a memory, lenses, and an image sensor, wherein the processor is connected to the memory, the lenses, and the image sensor, respectively;
the image sensor is configured to acquire a scene video of an external scene;
the memory is configured to store a computer program of the processor;
wherein the processor is configured to implement, by executing the computer program, the information prompt method according to any one claims 1 to 3;
the lenses are configured to process generated prompt information through the information prompt method.

8. A computer-readable storage medium on which a computer program is stored, wherein when the computer program is executed by a processor, the information prompt method according to any one of claims 1 to 3 is implemented.

9. A computer program product, comprising a computer program, wherein when the computer program is executed by a processor, the information prompt method according to any one of claims 1 to 3 is implemented.

## Patentansprüche

1. Verfahren zur Informationsaufforderung, wobei das Verfahren auf eine intelligente Brille angewandt wird und das Verfahren Folgendes umfasst:
Erfassen (101, 201, 301) eines Szenenvideos einer externen Szene;
Erfassen von Gesichtsinformationen von Kandidatenobjekten in dem Szenenvideo und Auswählen, als Reaktion auf eine Auswahlanweisung, eines Zielobjekts aus den Kandidatenobjekten, wobei die Auswahlanweisung durch Aufnehmen einer Augapfelposition eines Zuschauers erzeugt wird und das Szenenvideo ein Verhaltensmerkmal des Zielobjekts umfasst;
Abgleichen (102) von Aufforderungsinformationen, die dem Zielobjekt entsprechen, gemäß dem Verhaltensmerkmal, wobei die Aufforderungsinformationen dem Verhaltensmerkmal zugeordnet sind; und
Anzeigen (103, 204) der Aufforderungsinformationen auf Linsen der intelligenten Brille;
wobei das Abgleichen (102) von Aufforderungsinformationen, die dem Zielobjekt entsprechen, gemäß dem Verhaltensmerkmal Folgendes umfasst:
Extrahieren des Verhaltensmerkmals in dem Szenenvideo durch Berechnung bei Hochladen auf einen Server, wobei das Verhaltensmerkmal ein Aktionsmerkmal des Zielobjekts umfasst;
Berechnen, gemäß dem Aktionsmerkmal des Zielobjekts in dem Szenenvideo, von technischen Sportparametern, wobei die Aufforderungsinformationen die technischen Sportparameter umfassen;
wobei das Berechnen, gemäß dem Aktionsmerkmal des Zielobjekts in dem Szenenvideo, der technischen Sportparameter Folgendes umfasst:
Bestimmen, gemäß dem Aktionsmerkmal des Zielobjekts, einer Verhaltensart des Zielobjekts; und
Bestimmen, gemäß sowohl Zustandsänderungsinformationen einer Zielvorrichtung in dem Szenenvideo als auch der Verhaltensart, der technischen Sportparameter.

2. Verfahren zur Informationsaufforderung nach Anspruch 1, wobei das Verfahren nach dem Auswählen, als Reaktion auf die Auswahlanweisung, des Zielobjekts aus den Kandidatenobjekten ferner Folgendes umfasst:
Senden (303) von Objektinformationen des Zielobjekts an andere Vorrichtungen, wobei die anderen Vorrichtungen einen Server und/oder eine andere intelligente Brille umfassen;
Empfangen (304) eines anderen Szenenvideos und einer anderen Aufforderungsinformation, die von den anderen Vorrichtungen gesendet werden, wobei sich das andere Szenenvideo in mindestens einem Aufnahmewinkel der externen Szene von dem Szenenvideo unterscheidet und die andere Aufforderungsinformation Informationen sind, die dem Verhaltensmerkmal des Zielobjekts in dem anderen Szenenvideo zugeordnet sind; und
Anzeigen (305) des anderen Szenenvideos und/oder der anderen Aufforderungsinformation auf Linsen der intelligenten Brille.

3. Verfahren zur Informationsaufforderung nach Anspruch 1, ferner umfassend:
Bestimmen, gemäß einem Tonmerkmal in Audioinformationen, der Aufforderungsinformationen von Zielaudio, wobei das Zielobjekt das Zielaudio umfasst, das Szenenvideo die Audioinformationen umfasst und das Verhaltensmerkmal das Tonmerkmal umfasst.

4. Vorrichtung (400) zur Informationsaufforderung, umfassend:
ein Videoerfassungsmodul (401), das dazu konfiguriert ist, ein Szenenvideo einer externen Szene zu erfassen;
ein Gesichtserfassungsmodul (404), das dazu konfiguriert ist, Gesichtsinformationen von Kandidatenobjekten in dem Szenenvideo zu erfassen;
ein Objektauswahlmodul (407), das dazu konfiguriert ist, als Reaktion auf eine Auswahlanweisung ein Zielobjekt aus den Kandidatenobjekten auszuwählen, wobei die Auswahlanweisung durch Aufnehmen einer Augapfelposition eines Zuschauers erzeugt wird und das Szenenvideo ein Verhaltensmerkmal des Zielobjekts umfasst;
ein Informationsverarbeitungsmodul (402), das dazu konfiguriert ist, Aufforderungsinformationen, die dem Zielobjekt entsprechen, gemäß dem Verhaltensmerkmal abzugleichen, wobei die Aufforderungsinformationen dem Verhaltensmerkmal zugeordnet sind; und
ein Informationsanzeigemodul (403), das dazu konfiguriert ist, die Aufforderungsinformationen anzuzeigen;
wobei das Informationsverarbeitungsmodul (402) ferner konfiguriert ist zum:
Extrahieren des Verhaltensmerkmals in dem Szenenvideo durch Berechnung bei Hochladen auf einen Server, wobei das Verhaltensmerkmal ein Aktionsmerkmal des Zielobjekts umfasst;
Berechnen, gemäß dem Aktionsmerkmal des Zielobjekts in dem Szenenvideo, von technischen Sportparametern, wobei die Aufforderungsinformationen die technischen Sportparameter umfassen;
wobei das Informationsverarbeitungsmodul (402) konkret konfiguriert ist zum:
Bestimmen, gemäß dem Aktionsmerkmal des Zielobjekts, einer Verhaltensart des Zielobjekts; und
Bestimmen, gemäß sowohl Zustandsänderungsinformationen einer Zielvorrichtung in dem Szenenvideo als auch der Verhaltensart, der technischen Sportparameter.

5. Vorrichtung (400) zur Informationsaufforderung nach Anspruch 4, ferner umfassend:
ein Informationssendemodul (405), das dazu konfiguriert ist, Objektinformationen des Zielobjekts an andere Vorrichtungen zu senden, wobei die anderen Vorrichtungen einen Server und/oder eine andere intelligente Brille umfassen; und
ein Informationsempfangsmodul (406), das dazu konfiguriert ist, ein anderes Szenenvideo und eine andere Aufforderungsinformation zu empfangen, die von den anderen Vorrichtungen gesendet werden, wobei sich das andere Szenenvideo in mindestens einem Aufnahmewinkel der externen Szene von dem Szenenvideo unterscheidet und die andere Aufforderungsinformation Informationen sind, die dem Verhaltensmerkmal des Zielobjekts in dem anderen Szenenvideo zugeordnet sind;
das Informationsanzeigemodul (403) ferner dazu konfiguriert ist, das andere Szenenvideo und/oder die andere Aufforderungsinformation anzuzeigen.

6. Vorrichtung (400) zur Informationsaufforderung nach Anspruch 4, wobei das Informationsverarbeitungsmodul (402) ferner konfiguriert ist zum:
Bestimmen, gemäß einem Tonmerkmal in Audioinformationen, der Aufforderungsinformationen von Zielaudio, wobei das Zielobjekt das Zielaudio umfasst, das Szenenvideo die Audioinformationen umfasst und das Verhaltensmerkmal das Tonmerkmal umfasst.

7. Intelligente Brille, umfassend: einen Prozessor, einen Speicher, Linsen und einen Bildsensor, wobei der Prozessor mit dem Speicher, den Linsen bzw. dem Bildsensor verbunden ist;
der Bildsensor dazu konfiguriert ist, ein Szenenvideo einer externen Szene zu erfassen;
der Speicher dazu konfiguriert ist, ein Computerprogramm des Prozessors zu speichern;
wobei der Prozessor dazu konfiguriert ist, durch Ausführen des Computerprogramms das Verfahren zur Informationsaufforderung nach einem der Ansprüche 1 bis 3 umzusetzen;
die Linsen dazu konfiguriert sind, durch das Verfahren zur Informationsaufforderung erzeugte Aufforderungsinformationen zu verarbeiten.

8. Computerlesbares Speichermedium, auf dem ein Computerprogramm gespeichert ist, wobei, wenn das Computerprogramm durch einen Prozessor ausgeführt wird, das Verfahren zur Informationsaufforderung nach einem der Ansprüche 1 bis 3 umgesetzt wird.

9. Computerprogrammprodukt, umfassend ein Computerprogramm, wobei, wenn das Computerprogramm durch einen Prozessor ausgeführt wird, das Verfahren zur Informationsaufforderung nach einem der Ansprüche 1 bis 3 umgesetzt wird.

## Revendications

1. Procédé d'invite d'informations, dans lequel le procédé est appliqué à une paire de lunettes intelligentes, et le procédé comprend :
l'acquisition (101, 201, 301) d'une vidéo de scène d'une scène externe ;
l'acquisition d'informations de visage d'objets candidats dans la vidéo de scène, et la sélection, en réponse à une instruction de sélection, d'un objet cible à partir des objets candidats, dans lequel l'instruction de sélection est générée par la capture d'une position de globe oculaire d'un spectateur, et la vidéo de scène comprend une caractéristique de comportement de l'objet cible ;
la mise en correspondance (102) d'informations d'invite correspondant à l'objet cible selon la caractéristique de comportement, dans lequel les informations d'invite sont associées à la caractéristique de comportement ; et
l'affichage (103, 204) des informations d'invite sur des verres de la paire de lunettes intelligentes ;
dans lequel la mise en correspondance (102) d'informations d'invite correspondant à l'objet cible selon la caractéristique de comportement comprend :
l'extraction de la caractéristique de comportement dans la vidéo de scène par un calcul lors du téléchargement vers un serveur, dans lequel la caractéristique de comportement comprend une caractéristique d'action de l'objet cible ;
le calcul, selon la caractéristique d'action de l'objet cible dans la vidéo de scène, de paramètres techniques de sport, dans lequel les informations d'invite comprennent les paramètres techniques de sport ;
dans lequel le calcul, selon la caractéristique d'action de l'objet cible dans la vidéo de scène, des paramètres techniques de sport comprend :
la détermination, selon la caractéristique d'action de l'objet cible, d'un type de comportement de l'objet cible ; et
la détermination, selon à la fois des informations de changement d'état d'un dispositif cible dans la vidéo de scène et le type de comportement, des paramètres techniques de sport.

2. Procédé d'invite d'informations selon la revendication 1, dans lequel après la sélection, en réponse à l'instruction de sélection, de l'objet cible à partir des objets candidats, le procédé comprend en outre :
l'envoi (303) d'informations d'objet de l'objet cible à d'autres dispositifs, dans lequel les autres dispositifs comprennent un serveur et/ou une autre paire de lunettes intelligentes ;
la réception (304) d'une autre vidéo de scène et d'une autre information d'invite envoyées par les autres dispositifs, dans lequel l'autre vidéo de scène diffère de la vidéo de scène par au moins un angle de prise de vue de la scène externe, et l'autre information d'invite est une information associée à la caractéristique de comportement de l'objet cible dans l'autre vidéo de scène ; et
l'affichage (305) de l'autre vidéo de scène et/ou de l'autre information d'invite sur des verres de la paire de lunettes intelligentes.

3. Procédé d'invite d'informations selon la revendication 1, comprenant en outre :
la détermination, selon une caractéristique sonore dans des informations audio, des informations d'invite d'un audio cible, dans lequel l'objet cible comprend l'audio cible, la vidéo de scène comprend les informations audio, et la caractéristique de comportement comprend la caractéristique sonore.

4. Appareil d'invite d'informations (400), comprenant :
un module d'acquisition de vidéo (401), configuré pour acquérir une vidéo de scène d'une scène externe ;
un module d'acquisition de visage (404), configuré pour acquérir des informations de visage d'objets candidats dans la vidéo de scène ;
un module de sélection d'objet (407), configuré pour sélectionner, en réponse à une instruction de sélection, un objet cible à partir des objets candidats, dans lequel l'instruction de sélection est générée par la capture d'une position de globe oculaire d'un spectateur, et la vidéo de scène comprend une caractéristique de comportement de l'objet cible ;
un module de traitement d'informations (402), configuré pour mettre en correspondance des informations d'invite correspondant à l'objet cible selon la caractéristique de comportement, dans lequel les informations d'invite sont associées à la caractéristique de comportement ; et
un module d'affichage d'informations (403), configuré pour afficher les informations d'invite ;
dans lequel le module de traitement d'informations (402) est en outre configuré pour :
extraire la caractéristique de comportement dans la vidéo de scène par un calcul lors du téléchargement vers un serveur, dans lequel la caractéristique de comportement comprend une caractéristique d'action de l'objet cible ;
calculer, selon la caractéristique d'action de l'objet cible dans la vidéo de scène, des paramètres techniques de sport, dans lequel les informations d'invite comprennent les paramètres techniques de sport ;
dans lequel le module de traitement d'informations (402) est spécifiquement configuré pour :
déterminer, selon la caractéristique d'action de l'objet cible, un type de comportement de l'objet cible ; et
déterminer, selon à la fois des informations de changement d'état d'un dispositif cible dans la vidéo de scène et le type de comportement, les paramètres techniques de sport.

5. Appareil d'invite d'informations (400) selon la revendication 4, comprenant en outre :
un module d'envoi d'informations (405), configuré pour envoyer des informations d'objet de l'objet cible à d'autres dispositifs, dans lequel les autres dispositifs comprennent un serveur et/ou une autre paire de lunettes intelligentes ; et
un module de réception d'informations (406), configuré pour recevoir une autre vidéo de scène et d'une autre information d'invite envoyées par les autres dispositifs, dans lequel l'autre vidéo de scène diffère de la vidéo de scène par au moins un angle de prise de vue de la scène externe, et l'autre information d'invite est une information associée à la caractéristique de comportement de l'objet cible dans l'autre vidéo de scène ;
le module d'affichage d'informations (403) étant en outre configuré pour afficher l'autre vidéo de scène et/ou l'autre information d'invite.

6. Appareil d'invite d'informations (400) selon la revendication 4, dans lequel le module de traitement d'informations (402) est en outre configuré pour :
déterminer, selon une caractéristique sonore dans des informations audio, des informations d'invite d'un audio cible, dans lequel l'objet cible comprend l'audio cible, la vidéo de scène comprend les informations audio, et la caractéristique de comportement comprend la caractéristique sonore.

7. Paire de lunettes intelligentes, comprenant : un processeur, une mémoire, des verres, et un capteur d'image, dans laquelle le processeur est connecté à la mémoire, aux verres, et au capteur d'image, respectivement ;
le capteur d'image étant configuré pour acquérir une vidéo de scène d'une scène externe ;
la mémoire étant configurée pour stocker un programme informatique du processeur ;
dans laquelle le processeur est configuré pour mettre en œuvre, par l'exécution du programme informatique, le procédé d'invite d'informations selon l'une quelconque des revendications 1 à 3 ;
les verres étant configurés pour traiter des informations d'invite générées par le procédé d'invite d'informations.

8. Support de stockage lisible par un ordinateur sur lequel un programme informatique est stocké, dans lequel lorsque le programme informatique est exécuté par un processeur, le procédé d'invite d'informations selon l'une quelconque des revendications 1 à 3 est mis en œuvre.

9. Produit de programme informatique, comprenant un programme informatique, dans lequel lorsque le programme informatique est exécuté par un processeur, le procédé d'invite d'informations selon l'une quelconque des revendications 1 à 3 est mis en œuvre.
